# EUROPEAN PATENT APPLICATION

(11) **EP 2 733 670 A1**
(43) Date of publication of application: **21.05.2014**
(21) Application number: 14150034.8
(22) Date of filing: 29.03.2012
(51) Int. Cl.: G06T 7/00

(54) **Apparatus and method for generating depth information**

(30) Priority: 08.09.2011 KR 20110091122
(62) Divisional of application: 12162293.0
(71) Applicant: Samsung Electronics Co., Ltd, Gyeonggi-do 443-742 (KR)
(72) Inventor: Han, Seung-hoon, Seoul (KR)
(74) Representative: Robinson, Ian Michael

(57) **Abstract**

A method for generating depth information includes: receiving an input image including a plurality of frames; identifying a first frame (340) that is selected from the plurality of frames; obtaining depth information for the first frame (310); obtaining first depth information (341a) of a first object (341) that is selected from the first frame (340); identifying a second frame (360) that is selected from the plurality of frames; obtaining second depth information (361a) of a second object (361) that is selected from the second frame (360); selecting a third frame (350) from the plurality of frames; tracing a third object (351) from the third frame (350) based on the first object (341); and generating third depth information (351a) of the third object (351) as a proportional expression from the first and second depth information (341a, 361a) based on a comparison result between a size of the first object (341) on the first frame (340) and a size of the third object (351) on the third frame (350) and a comparison result between a size of the second object (341) on the second frame (340) and the size of the third object (351) on the third frame (350).

## Description

### BACKGROUND

### Field

Apparatuses and methods consistent with exemplary embodiments relate to generating depth information, and more particularly, to generating depth information for converting a two-dimensional (2D) input image to a three-dimensional (3D) image.

### Description of the Related Art

To convert a 2D image including a plurality of frames to a 3D image, depth information is generated to provide the 3D effect. However, generating the depth information for all of the frames consisting of the 2D image takes a great deal of time and is not cost-efficient.

### SUMMARY

According to the present invention there is provided an apparatus and method as set forth in the appended claims. Other features of the invention will be apparent from the dependent claims, and the description which follows.

Exemplary embodiments may address at least the above problems and/or disadvantages and other disadvantages not described above. Also, exemplary embodiments are not required to overcome the disadvantages described above, and an exemplary embodiment may not overcome any of the problems described above.

Exemplary embodiments provide an apparatus and a method for generating depth information which generates depth information with less time and in a cost-efficient manner and a computer-readable storage medium which is encoded by an instruction executed by a computer by the method thereof.

According to an aspect of an exemplary embodiment, there is provided a method for generating depth information including: receiving an input image including a plurality of frames; identifying a first frame that is selected from the plurality of frames; obtaining first depth information of a first object that is selected from the first frame; selecting a second frame from the plurality of frames; tracing a second object from the second frame based on the first object; and generating second depth information of the second object from the first depth information based on a comparison result between a position of the first object on the first frame and a position of the second object on the second frame.

The first and second objects may be recognized as a same object by a user within the plurality of frames.

The generating the second depth information may include generating the second depth information from the first depth information based on a position shift size from the position of the first object to a position of the second object.

The tracing the second object may include tracing the second object from the first object based on block or pixel.

The first frame may include a key frame.

The method may further include selecting a third frame from the plurality of frames; tracing a third object from the third frame based on at least one of the first and second objects; and generating third depth information of the third object from at least one of the first and second depth information based on a comparison result between at least one of a position of the first object on the first frame and a position of the second object on the second frame and a position of the third object on the third frame.

The first, second and third objects may be recognized as a same object by a user within the plurality of frames.

According to an aspect of an exemplary embodiment, there is provided a method for generating depth information including: receiving an input image including a plurality of frames; identifying a first frame that is selected from the plurality of frames; obtaining first depth information of a first object that is selected from the first frame; identifying a second frame that is selected from the plurality of frames; obtaining second depth information of a second object that is selected from the second frame; selecting a third frame from the plurality of frames; tracing a third object from the third frame based on the first object; and generating third depth information of the third object from the first and second depth information based on a comparison result between a position of the first object on the first frame and a position of the third object on the third frame and a comparison result between a position of the second object on the second frame and a position of the third object on the third frame.

The third frame may include a frame which is interposed between the first and second frames.

The generating the third depth information may further include calculating a first position shift size of the third object from the position of the first object; calculating a second position shift size of the third object from the position of the second object; and generating third depth information from the first and second depth information based on the first and second position shift sizes.

The third depth information may include a value that is between the first and second depth information.

The tracing the third object may include tracing the third object from the first object based on a block or pixel.

According to an aspect of an exemplary embodiment, there is provided an apparatus for generating depth information including: a receiver which receives an input image including a plurality of frames; and a depth information generator which identifies a first frame that is selected from the plurality of frames, obtains first depth information of a first object that is selected from the first frame, selects a second frame from the plurality of frames, traces a second object from the second frame based on the first object, and generates second depth information of the second object from the first depth information based on a comparison result between a position of the first object on the first frame and a position of the second object on the second frame.

The first and second objects may be recognized as a same object by a user within the plurality of frames.

The depth information generator may generate second depth information from the first depth information based on a position shift size of the second object compared to the position of the first object.

The depth information generator may trace the second object from the first object based on a block or pixel.

The first frame may include a key frame.

The depth information generator may select a third frame from the plurality of frames, trace a third object from the third frame based on at least one of the first and second objects, and generate third depth information of the third object from at least one of the first and second depth information based on a comparison result between at least one of the position of the first object on the first frame and the position of the second object on the second frame, and a position of the third object on the third frame.

The first, second and third objects may be recognized as a same object by a user within the plurality of frames.

According to an aspect of an exemplary embodiment, there is provided an apparatus for generating depth information including: a receiver which receives an input image including a plurality of frames; and a depth information generator which identifies a first frame that is selected from the plurality of frames, obtains first depth information of a first object that is selected from the first frame, identifies a second frame that is selected from the plurality of frames, obtains second depth information of a second object that is selected from the second frame, selects a third frame from the plurality of frames, traces a third object from the third frame based on the first object, and generates third depth information of the third object from the first and second depth information based on a comparison result between a position of the first object on the first frame and a position of the third object on the third frame and a comparison result between a position of the second object on the second frame and a position of the third object on the third frame.

The depth information generator may calculate a first position shift size of the third object from the position of the first object and calculate a second position shift size of the third object from the position of the second object, and generate the third depth information from the first and second depth information based on the first and second position shift sizes.

The depth information generator may trace the third object from the first object or trace the third object from the second object, based on a block or pixel.

According to an aspect of an exemplary embodiment, there is provided a computer-readable storage medium which stores a program that is executed by a computer by the method according to one of the foregoing methods.

### BRIEF DESCRIPTION OF THE DRAWINGS

The above and/or other aspects will become apparent by describing certain exemplary embodiments, with reference to the accompanying drawings, in which:
FIG. 1 is a control block diagram of an apparatus for generating depth information according to an exemplary embodiment;
FIGS. 2A and 2B illustrate a method for generating depth information by the apparatus for generating depth information of FIG. 1;
FIG. 3 is a control block diagram of an apparatus for generating depth information according to another exemplary embodiment;
FIGS. 4A and 4B illustrate a method for generating depth information by the apparatus for generating depth information of FIG. 3;
FIG. 5 is a control flowchart of a method for generating depth information by the apparatus for generating depth information of FIG. 1; and
FIG. 6 is a control flowchart of a method for generating depth information by the apparatus for generating depth information of FIG. 3.

### DETAILED DESCRIPTION OF EXEMPLARY EMBODIMENTS

Certain, exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be carried out without those specifically defined matters. Also, well-known functions or constructions are not described in detail since that would obscure the invention with unnecessary detail.

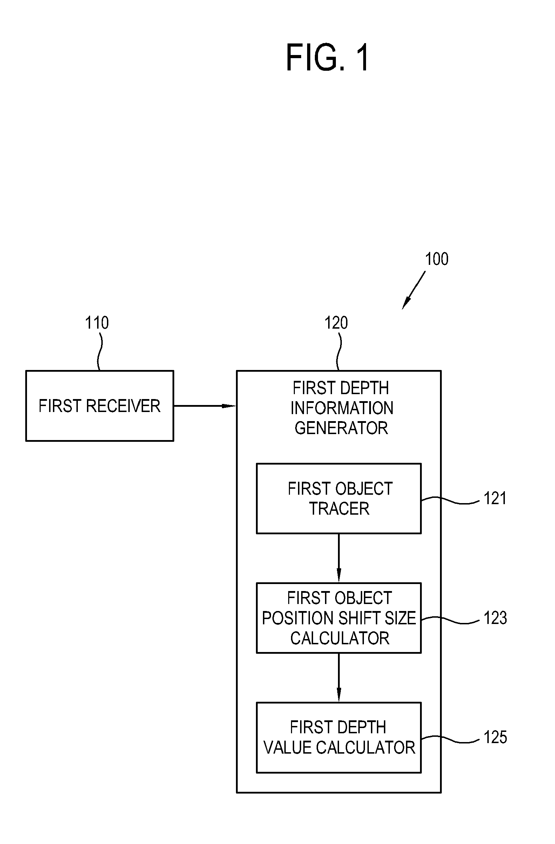

FIG. 1 is a control block diagram of an apparatus for generating depth information according to an exemplary embodiment.

An apparatus for generating depth information 100 includes a first receiver 110 and a first depth information generator 120.

The apparatus for generating depth information 100 may include any type of electronic apparatus which generates depth information required for converting a 2D image that is transmitted by a source supply device (not shown), into a 3D image. For example, the apparatus for generating depth information 100 may include a display apparatus such as a personal computer (PC).

The first receiver 110 receives a plurality of frames which consists of a 2D image from a source supply source (not shown). The first receiver 110 may receive a plurality of frames consisting of the 2D image from the source supply device through a predetermined network (not shown), and include a predetermined communication module to communicate with the network. The source supply device may include a network server, and store a 2D image and transmit the 2D image to the apparatus for generating depth information 100 at the request of the apparatus for generating depth information 100.

For example, the source supply device may include an external storage medium which includes a storage means such as a hard disk or a flash memory to store a 2D image. The apparatus for generating depth information 100 is connected to the source supply device as a local device through the first receiver 110, and the source supply device may transmit a 2D image to the apparatus for generating depth information 100 at the request of the apparatus for generating depth information 100. For example, the first receiver 110 may include a module for realizing a local connection method for the apparatus for generating depth information 100 and the source supply device. The first receiver 110 may include a universal serial bus (USB) module or the like device.

The first receiver 110 may receive basic information for generating depth information in the form of meta data with respect to the 2D image transmitted by the source supply device. The basic information for generating depth information may include at least one of information for identifying a key frame from a plurality of frames consisting of the 2D image transmitted by the source supply device, information for identifying an object selected from the key frame, and depth value information of the object. The basic information for generating depth information may be transmitted together with the 2D image by the source supply device, or transmitted by an external device (not shown). The information for identifying the key frame is the information for recognizing a key frame among the plurality of frames consisting of the 2D image. The key frame may be selected on the basis of at least one of scene change, appearance of an important object, and motion change quantity of the object. The object identification information includes information on at least one object selected from objects of the key frame. For example, as position information for at least one object extracted from the key frame, the object identification information may include position information for each block or pixel. The depth value information includes information on a depth value that is allotted to an object extracted from the key frame.

The first depth information generator 120 identifies a first frame that is selected from a plurality of frames received through the first receiver 110, obtains first depth information of a first object selected from the first frame, selects a second frame among the plurality of frames, traces a second object from the second frame based on the first object, and generates second depth information of the second object from the first depth information based on a comparison result between a position of the first object on the first frame and a position of the second object on the second frame.

The plurality of frames consisting of a 2D image and basic information for generating depth information for the 2D which are received through the first receiver 110 are transmitted to the first depth information generator 120. The first depth information generator 120 may identify a first frame selected from the plurality of frames consisting of the 2D image, based on key frame identification information included in the basic information for generating depth information. The first frame includes a key frame. First depth information of the first object that is selected from the first frame may be obtained on the basis of the object identification information and depth value information included in the basic information for generating depth information. The first depth information generator 120 may select a non-key frame among the plurality of frames consisting of the 2D image received through the first receiver 110, extract the object from the non-key frame based on the first depth information of the first object and assign a depth value to the object to promptly and cost-efficiently generate depth information for the non-key frame.

The first depth information generator 120 includes a first object tracer 121, a first object position shift size calculator 123 and a first depth value calculator 125.

The first object tracer 121 selects a second frame from non-key frames among a plurality of frames consisting of a 2D image. The first object tracer 121 traces a second object from the second frame selected on the basis of the first object. The first and second objects are recognized as the same object by a user within the plurality of frames. The first object tracer 121 traces the second object selected from the second frame based on identification information or position information of the first object by using various known object tracing algorithms. Tracing the second object is performed by block or pixel by using various known object tracing algorithms.

The first object position shift size calculator 123 receives information on the second object selected from the second frame for which tracing has been completed, from the first object tracer 121. The first object position shift size calculator 123 calculates a position shift size by comparing the position of the first object on the first frame and the position of the second object on the second frame. For example, if the second object is traced by block, the first object position shift size calculator 123 compares a position of one of a plurality of blocks consisting of the first object on the frame and a position of a corresponding block on the second frame to calculate the shift size based on the positions of the blocks. That is, as the first and second objects are recognized as the same object by a user within the plurality of frames, the position of the block consisting of the first object on the first frame may have been shifted to a certain position of the second frame, and the first object position shift size calculator 123 calculates the shifted size. As the shifting direction is known when the second object is traced by the first object tracer 121, the first object position shift size calculator 123 calculates the shift size. This also applies mutatis mutandis to the case where the second object is traced by pixel. The calculation result is transmitted to the first depth value calculator 125.

The first depth value calculator 125 generates second depth information of the second object from the first depth information of the first object based on the comparison result transmitted by the first object position shift size calculator 123. The first depth information is a depth value allotted to the first object, and the depth value may be allotted to the first object by block or pixel. For example, if the first object position shift size calculator 123 transmits information on the shift size of one of a plurality of blocks consisting of the first object, the first depth value calculator 125 allots the depth value with the same size as that allotted to the block of the first object, to a corresponding block that is shifted as much as the shift size among the second object to generate second depth information of the second object. This also applies mutatis mutandis to the case where the second object is traced by pixel.

The first depth information generator 120 may select a third frame among a plurality of frames consisting of a 2D image received through the first receiver 110, trace a third object of the third frame and generate depth information. This may be performed by the same method as the method for tracing the second object of the second frame and generating depth information. That is, the third object of the third frame may be traced on the basis of at least one of the first object of the first frame and the second object of the second frame by using the method that is the same as or similar to the method for tracing the second object as described above. The first depth information generator 120 may generate third depth information of the third object from at least one of the first and second depth information based on the comparison result between at least one of the position of the first object on the first frame and the position of the second object on the second frame, and the position of the third object on the third frame by using the method that is the same as or similar to the method for generating the second depth information of the second object.

The third frame is selected from non-key frames among the plurality of frames and includes one of the non-key frames which appears following the second frame temporally. The first, second and third objects are recognized as the same object by a user among the plurality of frames.

The first depth information generator 120 traces a third object by block or pixel from at least one of the first and second objects. This is performed by the same method as the method for tracing the second object from the first object. The first depth information generator 120 may generate third depth information of the third object based on at least one of the first depth information generated for the first object and the second depth information generated for the second object. This is performed by the same method as the method for generating the second depth information based on the first depth information of the first object.

The apparatus for generating depth information 100 according to the current exemplary embodiment may also obtain basic information for generating depth information by a user's input which is described in greater detail below, instead of receiving the basic information for generating depth information in the form of meta data through the first receiver 110. The apparatus for generating depth information 100 may further include a display unit (not shown), a UI generator (not shown) and a user input unit (not shown).

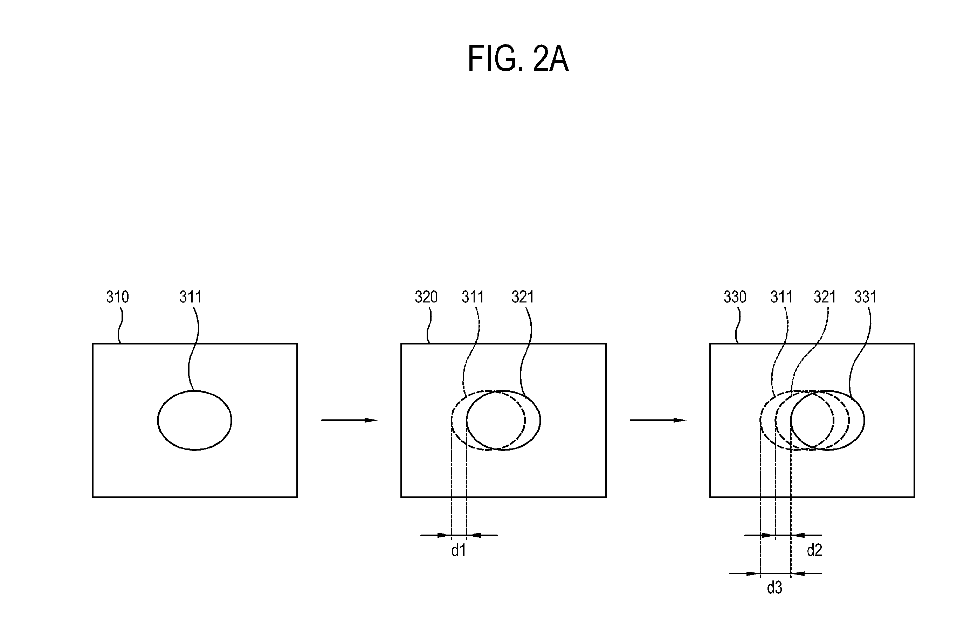

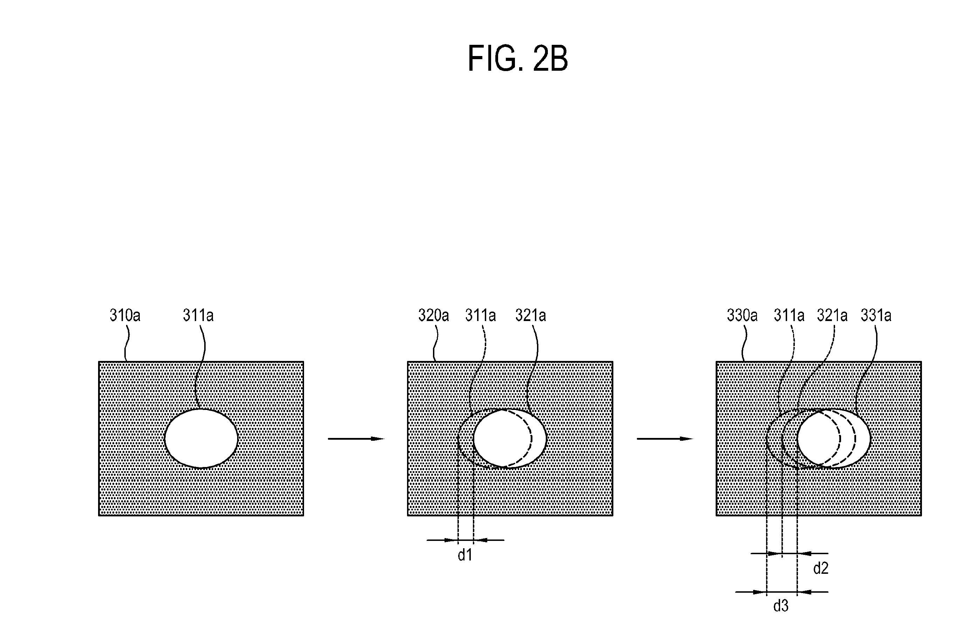

The operation of the first depth information generator 120 according to an exemplary embodiment is described in more detail below based on FIGS. 2A and 2B.

As shown in FIG. 2A, if a plurality of frames consisting of a 2D image and information for generating depth information are received through the first receiver 110, the first depth information generator 120 identifies a first frame 310 corresponding to a key frame among the plurality of frames based on key frame identification information included in the information for generating depth information. Further, the first depth information generator 120 identifies a position of the first object 311 from the first frame 310 based on object identification or position information included in the information for generating depth information, and obtains a depth value allotted to the first object 311 based on the depth value information included in the information for generating depth information.

The first depth information generator 120 selects a second frame 320 corresponding to a non-key frame from the plurality of frames.

The first object tracer 121 of the first depth information generator 120 traces a second object 321 from the second frame 320 based on the first object 311 by using a known object tracing algorithm. Tracing the second object 321 may indicate a position of the second object 321 on the second frame 320. The first object position shift size calculator 123 compares a position of the first object 311 on the first frame 310 and a position of the second object 321 on the second frame 320, and calculates the position shift size d1 of the second object 321 as compared to the position of the first object 311. As shown in FIG. 2A, the second object 321 has been shifted by d1 from a position of the first object 311.

As shown in FIG. 2B, the first depth value calculator 125 may receive a depth value allotted to the first object 311 and generate a depth map for the first frame. A particular depth value 311a is allotted to the first object from the first frame 310a. Based on the position shift size d1 between the first and second objects transmitted by the first object position shift size calculator 123, the first depth value calculator 125 shifts the depth map 311a of the first object 311 by the position shift size d1 to generate second depth information 321a of the second object 321 on a second frame 320a.

The first depth information generator 120 selects a third frame 330 from non-key frames of the plurality of frames, and traces a third object 331 from the second object 321 of the second frame 320. The first depth information generator 120 may otherwise trace the third object 331 from the first object 311 of the first frame 310. The method for tracing the third object 331 is the same as the method for tracing the second object 321 from the first object 311.

If the third object 331 is traced, the position shift size d2 from the position of the second object to the position of the third object 331 is calculated, and third depth information 331a is generated from the second depth information 321a based on the position shift size d2 on a third frame 330a. Otherwise, the position shift size d3 from the position of the first object to the position of the third object 331 may be calculated, and the third depth information 331a may be generated from the first depth information 311a based on the position shift size d3. The method for generating the third depth information is the same as the method for generating the second depth information 321a as described above.

As a result, the method for generating depth information according to the current exemplary embodiment may easily generate depth information on the non-key frame within short time period and in a cost-efficient manner.

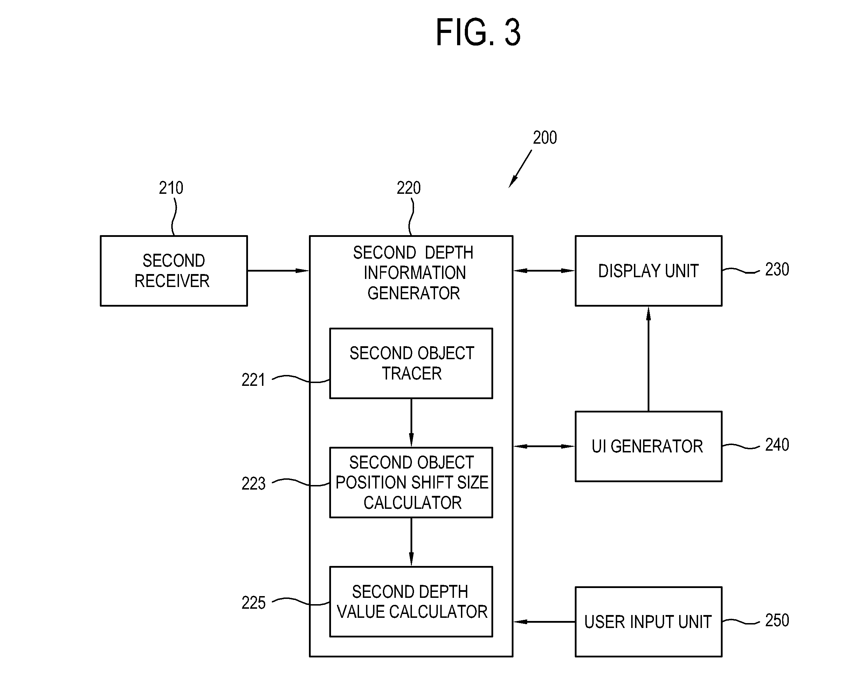

FIG. 3 is a control block diagram of an apparatus for generating depth information 200 according to another exemplary embodiment.

Like the apparatus for generating depth information 100 illustrated in FIG. 1, the apparatus for generating depth information 200 may include any type of electronic device which generates depth information for converting a 2D image transmitted by a source supply device, into a 3D image. For example, the apparatus for generating depth information 200 may include a display apparatus such as a personal computer (PC).

The apparatus for generating depth information 200 further includes a display unit 230, a user interface (UI) generator 240 and a user input unit 250. The apparatus for generating depth information 200 provides a UI that is generated by the UI generator 240 and displayed on the display unit 230 among a plurality of frames consisting of the 2D image, and basic information for generating the depth information is generated by a user's input that is received through the user input unit 250.

The UI generator 240 may generate and display on the display unit 230 a first UI to identify a frame among the plurality of frames, and receive a first user input through the user input unit 250 by the first UI. According to the first user input, the apparatus for generating depth information 200 may identify the frame. To identify an object on the identified frame, the UI generator 240 may generate and display on the display unit 230 a second UI, and receive a second user input through the user input unit 250 by the second UI. According to the second user input, the apparatus for generating depth information 200 may identify the object.

To obtain depth information of the identified object, the UI generator 240 may generate and display on the display unit 230 a third UI, and receive a third user input through the user input unit 250 by the third UI. According to the third user input, the apparatus for generating depth information 200 may obtain the depth information. Accordingly, the apparatus for generating depth information 200 may identify the first and second frames according to the first user input through the first UI, identify the first and second objects according to the second user input through the second UI, and obtain the first and second depth information according to the third user input through the third UI. According to the current exemplary embodiment, the basic information for generating depth information is the information according to the user's input.

The second receiver 210 receives a plurality of frames consisting of a 2D image from the source supply device, and performs the operation similar to that of the first receiver 110 described above.

The second depth information generator 220 identifies a first frame that is selected from the plurality of frames, obtains first depth information of the first object that is selected from the first frame, identifies the second frame that is selected from the plurality of frames, obtains second depth information of the second object that is selected from the second frame, selects a third frame from the plurality of frames, traces the third object from the third frame based on the first object, and generates third depth information of the third object from the first and second depth information based on a comparison result between a position of the first object on the first frame and a position of the third object on the third frame and a comparison result between a position of the second object on the second frame and a position of the third object on the third frame.

The second depth information generator 220 receives the plurality of frames consisting of the 2D image received through the second receiver 210 and basic information for generating depth information with respect to the 2D image received through the user input unit 250. The second depth information generator 220 may identify the first and second frames based on the basic information for generating depth information.

At least one of the first and second frames corresponds to a key frame among the plurality of frames consisting of the 2D image, and may be selected by a user's input based on at least one of scene change, appearance of a major object and a quantity of motion change of the object. The first and second frames may include key frames, and the second frame includes a key frame which comes after the first frame temporally. The second depth information generator 220 may obtain first depth information of the first object selected from the first frame and second depth information of the second object selected from the second frame based on the basic information for generating depth information.

The second depth information generator 220 may select a third frame from the plurality of frames, and the third frame may include a frame that is interposed between the first and second frames.

The second depth information generator 220 includes a second object tracer 221, a second object position shift size calculator 223 and a second depth value calculator 225.

The second object tracer 221 selects the third frame from non-key frames among the plurality of frames consisting of the 2D image. For example, the second object tracer 221 selects the third frame which is the non-key frame interposed between the first and second frames. The second object tracer 221 traces the third object from the third frame selected on the basis of the first object. The first object of the first frame, second object of the second frame, and third object of the third frame are recognized as the same object by a user within the plurality of frames. The second object tracer 221 may obtain position information of the first object on the first frame and position information of the second object on the second frame that are identified by a user's input. Accordingly, the second object tracer 221 traces the third object selected from the third frame based on the first object position information by using various known object tracing algorithms. Tracing the third object is performed by using various known object tracing algorithms by block or pixel based on the first object. By the same method as above, the second object tracer 221 may trace the third object of the third frame based on the second object of the second frame.

The second object position shift size calculator 223 receives from the second object tracer 221 information of the third object selected from the third frame that has been traced completely. Also, the second object position shift size calculator 223 receives position information of the first and second objects from the second object tracer 221. The second object position shift size calculator 223 calculates the position shift size by the same method as the first object position shift size calculator 221 as described above.

The second object position shift size calculator 223 calculates a first position shift size between the first and third objects by comparing the position of the first object on the first frame and the position of the third object on the third frame, and calculates a second position shift size between the second and third objects by comparing the position of the second object on the second frame and the position of the third object on the third frame. The current exemplary embodiment may apply to the case where the first to third objects, which are recognized as the same object by a user within the plurality of fames, change in size by zoom-in or zoom-out. Accordingly, the first position shift size includes a ratio of increase/decrease in size of the first and third objects, and the second position shift size includes a ratio of increase/decrease in size of the second and third objects.

The first and second position shift sizes are calculated as described above are transmitted to the second depth value calculator 225.

The second depth value calculator 225 generates third depth information of the third object from the first depth information of the first object and the second depth information of the second object based on the first and second position shift sizes transmitted by the second object position shift size calculator 223.

The second depth value calculator 225 receives first depth information of the first object and second depth information of the second object which are obtained by a user's input, and obtains a difference value by comparing the first and second depth information. Accordingly, the second depth value calculator 225 may generate third depth information by calculating a depth value which is allotted to the third object with respect to the first and second depth information by using a proportional expression since the first and second position size information and the first to third depth information are known. The generated third depth information may include a value that is between the first and second depth information values.

The display unit 230 displays a UI that is generated by the UI generator 240. The display unit 230 may display the UI together with the plurality of frames consisting of the 2D image. The display unit 230 may include, but not limited to, a liquid crystal, plasma, light-emitting diode, organic light-emitting diode, surface-conduction electron-emitter, carbon nano-tube, and a nano-crystal.

The UI generator 240 may generate and display a first UI for identifying a first frame, a second UI for identifying a first object and a third UI for obtaining the first depth information. The generated Uls may be a graphic user interface (GUI).

As a UI for receiving a user's input, the user input unit 250 receives a user's selection relating to a function or operation of the apparatus for generating depth information 200. The user input unit 250 may include at least one key button, and may be a manipulation panel or touch panel which is provided in the apparatus for generating depth information 200. The user input unit 250 may be a remote controller, a keyboard, a mouse or a pointer which is connected to the apparatus for generating depth information 200 in a wired or wireless manner.

The apparatus for generating depth information 200 according to the current exemplary embodiment may also receive the basic information for generating depth information in the form of meta data from the second receiver 210 by the same method as the apparatus for generating depth information 100, instead of obtaining the basic information by a user's input.

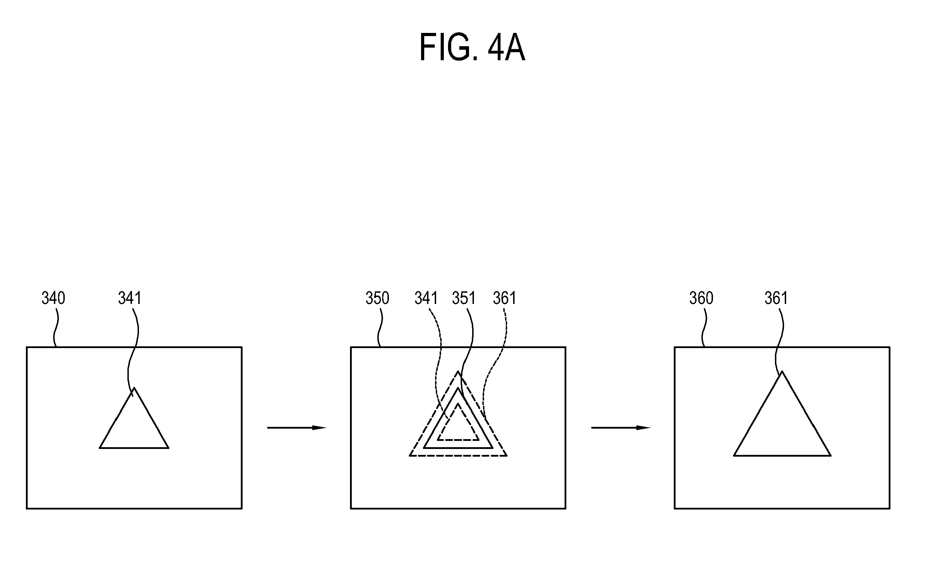

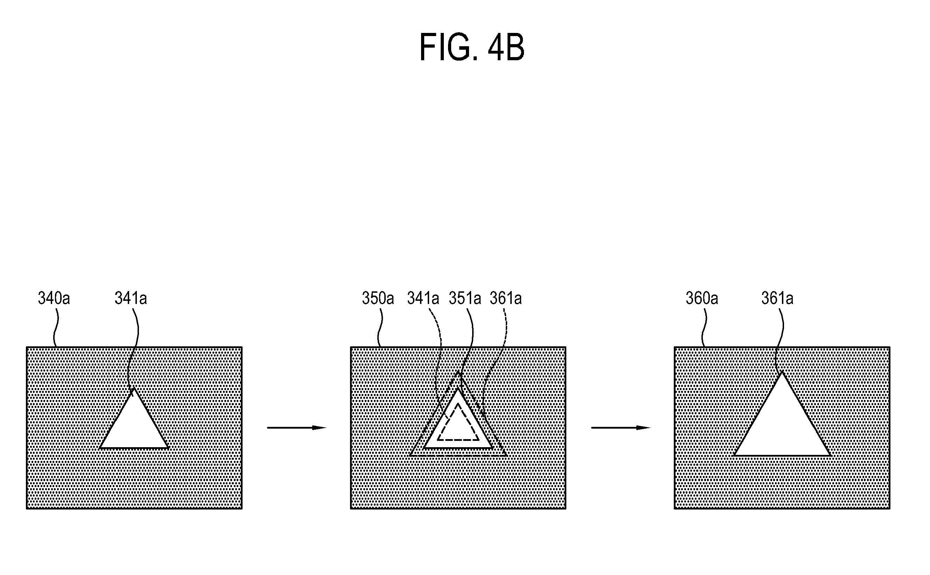

FIGS. 4A and 4B illustrate a method for generating depth information by the apparatus for generating depth information illustrated in FIG. 3.

As shown in FIG. 4A, the depth information generator 220 may identify the first and second frames 340 and 360 and the first and second objects 341 and 361 based on the basic information for generating depth information which are obtained by a user's input, and obtain the first depth information as a depth value allotted to the first object 341 and second depth information as a depth value allotted to the second object 361. The second depth information generator 220 selects the third frame 350 which is interposed between the first and second frames 340 and 360 among the plurality of frames.

The second object tracer 221 traces the third object 351 from the third frame 350 based on the first object 341 by using a known object tracing algorithm. Tracing the third object 351 as above may indicate the position of the third object 351 on the third frame 350. The second object tracer 221 may also trace the third object 351 from the third frame 350 based on the second object 361. The second object position shift size calculator 223 calculates the position shift size of the third object 351 with respect to the first object 341 by comparing the position of the first object 341 on the first frame 340 and the position of the third object 351 on the third frame 350. As shown in FIG. 4A, the third object 351 has an increased size at a predetermined ratio as compared to the first object 341. Accordingly, the second object tracer 221 calculates a first position shift size including the size increase ratio between the first and third objects 341 and 351. The second object tracer 221 calculates a second position shift size including the size increase ratio between the second and third objects 361 and 351 by the same method as above.

As shown in FIG. 4B, the second depth value calculator 225 may generate a depth map for the first frame 340 by receiving the depth value allotted to the first object 341. A particular depth value 341a is allotted to the first object from the first frame 340a. The second depth value calculator 225 may generate a depth map for the second frame 360 by the same method. A particular depth value 361 a is allotted to the second object from the second frame 360a.

The second depth value calculator 225 compares the depth value 341a of the first object and the depth value 361a of the second object to obtain a difference value. Accordingly, the second depth value calculator 225 may calculate a depth value 351a of the third object on the third frame 350a by using a proportional expression as the first and second depth information 341a and 361a and the difference value therebetween are known. As a result, the second depth value calculator 225 may generate third depth information from the first and second depth information based on the first and second position shift sizes and the difference value obtained as described above.

The method for generating depth information according to the current exemplary embodiment may generate depth information for the non-key frame without difficulty by using the result of tracing the object, within short time period and in a cost-efficient manner.

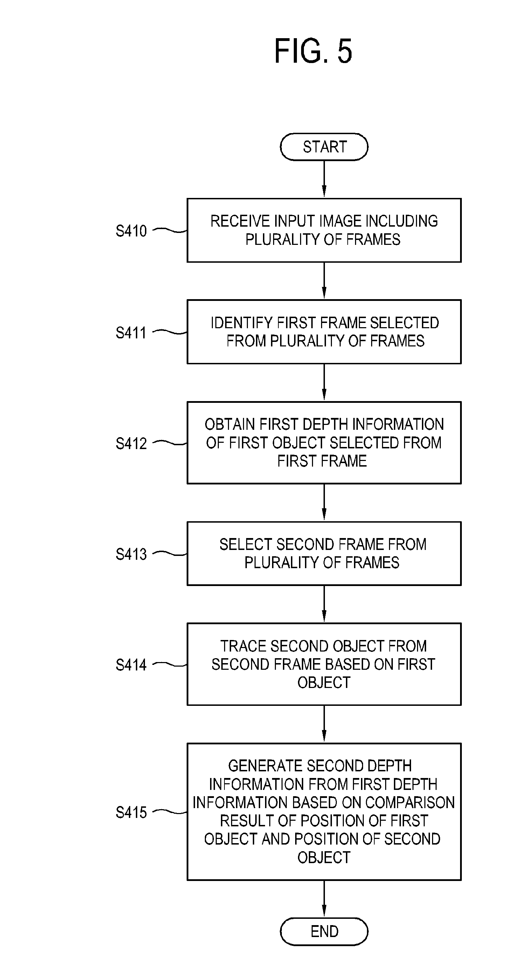

FIG. 5 is a control flowchart of the method for generating depth information according to an exemplary embodiment.

The method for generating depth information includes an operation (S410) of receiving an input image (2D image) including a plurality of frames through the first receiver 110, and an operation (S411) of identifying the first frame selected from the plurality of frames through the first depth information generator 120. Identifying the first frame may be based on the basic information for generating depth information which is provided in the form of meta data received through the first receiver 110. The first frame corresponds to the key frame among the plurality of frames. The foregoing method includes an operation (S412) of obtaining the first depth information of the first object selected from the first frame that is identified through the first depth information generator 120. Identifying the first object and obtaining the first depth information is based on the basic information for generating depth information provided in the form of meta data received through the first receiver 110. The method includes an operation (S413) of selecting the second frame from the plurality of frames by the first depth information generator 120. The second frame is selected from the non-key frame among the plurality of frames. The method includes an operation (S414) of tracing the second object from the second frame based on the first object by the first depth information generator 120. The method includes an operation (S415) of generating the second depth information from the first depth information based on a comparison result between the position of the first object and the position of the second object.

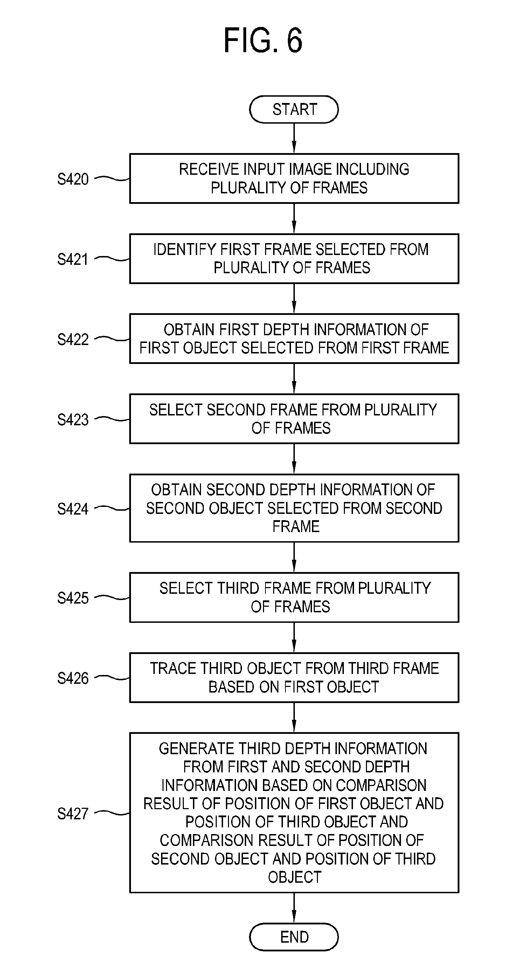

FIG. 6 is a control flowchart of a method for generating depth information according to another exemplary embodiment.

The method for generating depth information includes an operation (S420) of receiving an input image (2D image) including a plurality of frames through the second receiver 210, and an operation (S421) of identifying the first frame selected from the plurality of frames through the second depth information generator 220. The method includes an operation (S422) of obtaining the first depth information of the first object selected from the first frame that is identified through the second depth information generator 220. The method includes an operation (S423) of identifying the second frame selected from the plurality of frames through the second depth information generator 220, and an operation (S424) of obtaining the second depth information of the second object selected from the identified second frame. Identifying the first and second frames, identifying the first and second objects and obtaining the first and second depth information may be based on the basic information for generating depth information by a user's input that is received through the user input unit 250, by using the UI generated by the UI generator 240 and displayed on the display unit 230.

The method includes an operation (S425) of selecting the third frame from the plurality of frames by the second depth information generator 220. The third frame includes a frame that is interposed between the first and second frames among the plurality of frames. The method includes an operation (S426) of tracing the third object from the third frame based on the first object by the second depth information generator 220. The method includes an operation (S427) of generating the third depth information from the first and second depth information based on the comparison result between the position of the first object and the position of the third object and the comparison result between the position of the second object and the position of the third object. The operation (S427)further includes an operation of calculating the first position shift size between the first and third objects, and the second position shift size between the second and third objects, an operation of calculating a difference value between the first and second depth information and an operation of generating the third depth information by using the proportional expression based on the first and second position shift sizes and the difference value of the depth information.

The method for generating depth information according to an exemplary embodiment may be realized as a program instruction which is executed by various computer means and recorded in a computer-readable storage medium. The computer-readable storage medium may include a program instruction, a data file and a data configuration solely or collectively. The program instruction which is recorded in the storage medium may be specifically designed and configured for an exemplary embodiment or known to the skilled in computer software and available. For example, the computer-readable storage medium includes magnetic media such as hard disk, floppy disk and magnetic tape, optical media such as CD-ROM or DVD, magnetooptical medium such as a floptical disk and hardware devices which are specifically configured to store and execute a program instruction such as ROM, RAM and flash memory. The program instruction may include, e.g., an advanced language code which is executed by a computer by using an interpreter as well as a machine code generated by a compiler. The hardware device may be configured to operate as at least one software module to perform the operations according to the present invention, and vice versa.

As described above, an apparatus and method for generating depth information which generates depth information with less time and in a cost-efficient manner, and a computer-readable storage medium thereof which is encoded by an instruction that is executed by a computer according to the method thereof.

Although a few preferred embodiments have been shown and described, it will be appreciated by those skilled in the art that various changes and modifications might be made without departing from the scope of the invention, as defined in the appended claims.

## Claims

1. A method for generating depth information for use in converting 2D images into 3D, the method including:
receiving an input image including a plurality of frames;
identifying a first frame (340) that is selected from the plurality of frames;
obtaining depth information for the first frame (310);
selecting another frame (320) from the plurality of frames;
generating depth information for the other frame (320) based on the depth information of the first frame (310);
**characterised by**:
obtaining first depth information (341a) of a first object (341) that is selected from the first frame (340);
identifying a second frame (360) that is selected from the plurality of frames;
obtaining second depth information (361a) of a second object (361) that is selected from the second frame (360);
selecting a third frame (350) from the plurality of frames;
tracing a third object (351) from the third frame (350) based on the first object (341); and
generating third depth information (351a) of the third object (351) as a proportional expression from the first and second depth information (341a, 361a) based on a comparison result between a size of the first object (341) on the first frame (340) and a size of the third object (351) on the third frame (350) and a comparison result between a size of the second object (341) on the second frame (340) and the size of the third object (351) on the third frame (350).

2. The method of claim 1, comprising selecting the first frame (340) as a key frame on the basis of a scene change in the 2D images.

3. The method of claim 1, comprising selecting the first frame (340) as a key frame on the basis of arrival of an important object in the 2D images.

4. The method of claim 1, wherein the third frame (350) is a frame which is interposed temporally between the first and second frames (340, 360).

5. The method of any of claims 1 to 4, wherein the third depth information (351a) comprises a value that is between the first and second depth information (341a, 361a).

6. The method of any of claims 1 to 5, wherein the tracing the third object (351) may include tracing the third object (351) from the first object (341) based on a block or pixel.

7. The method of any of claims 1 to 6, wherein the generating comprises:
calculating a first position shift size between the first and third objects (341, 351), and a second position shift size between the second and third objects (361, 351),
calculating a difference value between the first and second depth information (341a, 361 a); and
generating the third depth information (351a) by using the proportional expression based on the first and second position shift sizes and the difference value of the depth information.

8. The method of claim 7, wherein the first position shift size includes a ratio of increase/decrease in size of the first and third objects (341, 351), and the second position shift size includes a ratio of increase/decrease in size of the second and third objects (351, 361).

9. The method of any preceding claim further comprising:
generating the third depth information of the third object (321, 351) in the third frame (320, 360) also from the first depth information of the first object (311, 341) in the first frame (310, 340) based on a comparison result between a position of the first object (311, 341) on the first frame (310, 340) and a position of the third object (321) on the third frame (320, 360).

10. The method of claim 9, wherein the generating the third depth information comprises generating the third depth information from the first depth information based on a position shift size from the position of the first object (311, 341) on the first frame (310, 340) to the position of the third object (321, 351) on the third frame (320, 350).

11. An apparatus for generating depth information for use in converting 2D images into 3D, the apparatus including:
a receiver (210) which receives an input image including a plurality of frames; and
a depth information generator (220) which generates depth information for one froam from another frame;
**characterised in that** the depth information generator (220):
identifies a first frame (340) that is selected from the plurality of frames,
obtains first depth information (341a) of a first object (341) that is selected from the first frame (340),
identifies a second frame (360) that is selected from the plurality of frames,
obtains second depth information (361a) of a second object (361) that is selected from the second frame (360),
selects a third frame (350) from the plurality of frames,
traces a third object (351) from the third frame (350) based on the first object (341), and
generates third depth information (351a) of the third object (351) as a proportional expression from the first and second depth information (341a, 361a) based on a comparison result between a size of the first object (341) on the first frame (340) and a size of the third object (351) on the third frame (350) and a comparison result between a size of the second object (341) on the second frame (340) and the size of the third object (351) on the third frame (350).

12. The apparatus of claim 11, comprising selecting a key frame on the basis of a scene change in the 2D images and/or selecting a key frame on the basis of arrival of an important object in the 2D images.

13. The apparatus of claim 11 or 12, wherein the receiver (210) is arranged to receive basic information for generating depth information in the form of meta data.

14. The apparatus of claim 11 or 12, wherein the receiver (210) is arranged to obtain basic information for generating the depth information by a user's input.

15. A computer-readable storage medium which stores a program that is executed by a computer to perform the method according to any of claims 1 to 10.
